# EUROPEAN PATENT APPLICATION

(11) **EP 4 575 734 A1**
(43) Date of publication of application: **25.06.2025**
(21) Application number: 23893823.7
(22) Date of filing: 21.11.2023
(51) Int. Cl.: G06F 3/0482

(54) **METHOD AND APPARATUS FOR DETERMINING RECOMMENDATION INFORMATION, ELECTRONIC DEVICE, AND STORAGE MEDIUM**

(30) Priority: 21.11.2022 CN 202211459683
(71) Applicant: Beijing Youzhuju Network Technology Co., Ltd., Beijing 101299 (CN)
(72) Inventor: ZHANG, Hongyang, Beijing 100028 (CN); WANG, Kangle, Beijing 100028 (CN)
(74) Representative: Williams, Michael David
(86) International application number: PCT/CN2023/132902
(87) International publication number: WO 2024/109733

(57) **Abstract**

Embodiments of the present disclosure provide a method and apparatus for determining recommendation information, an electronic device, and a computer readable medium. The method comprises: in response to an object selection operation, determining an object to be recommended, and displaying an information recommendation page corresponding to said object, wherein the information recommendation page comprises a plurality of pieces of object feature information of said object, and the object feature information of said object is determined according to multimedia information satisfying a preset condition and corresponding to said object; and in response to a determination operation for at least one piece of object feature information of said object, using the at least one piece of object feature information as recommendation information of said object.

## Description

The patent application claims the priority of the Chinese patent application No. 202211459683.8 filed on November 21, 2022, the entire disclosure of which is incorporated herein by reference as part of the present application.

### TECHNICAL FIELD

Embodiments of the present disclosure relate to a method and an apparatus for determining recommendation information, an electronic device, and a storage medium.

### BACKGROUND

In the process of introducing an object to be recommended through multimedia, the mining of the object feature information of the object to be recommended is an important measurement standard of multimedia quality. Through good feature expression and scene-based display, the feature information of the object to be recommended can be output with high quality. For example, in the process of introducing a merchandise through multimedia, it is important to well express the selling points of the merchandise, such as the advantages and usage scenarios of the merchandise. In order to better mine the object feature information of the object to be recommended, mutual reference and learning between a plurality of pieces of multimedia information can improve the quality and efficiency of introducing the object to be recommended.

However, multimedia creators usually need to manually browse a large number of multimedia resources, manually record information, and extract object feature information therefrom, so as to provide information for the multimedia being created. This kind of introduction of the object to be recommended is inefficient, and the amount of data manually browsed is limited, and the quality of the information formed to introduce the object to be recommended is not high.

### SUMMARY

The embodiments of the present disclosure aim to provide a method and apparatus for determining recommendation information, an electronic device, and a storage medium, which can improve the quality and efficiency of obtaining recommendation information of an object to be recommended.

In order to solve the above technical problems, the embodiments of the present disclosure are implemented through the following aspects.

In a first aspect, an embodiment of the present disclosure provides a method for determining recommendation information, including: determining, in response to an object selection operation, an object to be recommended, and displaying an information recommendation page corresponding to the object to be recommended; the information recommendation page includes a plurality of pieces of object feature information of the object to be recommended, and the object feature information of the object to be recommended is determined according to multimedia information corresponding to the object to be recommended and satisfying a preset condition; taking, in response to a determination operation for at least one piece of object feature information of the object to be recommended, the at least one piece of object feature information as recommendation information of the object to be recommended.

In a second aspect, an embodiment of the present disclosure provides an apparatus for determining recommendation information, including: a first determination module, configured to determine, in response to an object selection operation, an object to be recommended, and display an information recommendation page corresponding to the object to be recommended; the information recommendation page including a plurality of pieces of object feature information of the object to be recommended, and the object feature information of the object to be recommended being determined according to multimedia information corresponding to the object to be recommended and satisfying a preset condition; and a second determination module, configured to take, in response to a determination operation for at least one piece of object feature information of the object to be recommended, the at least one piece of object feature information as recommendation information of the object to be recommended.

In a third aspect, an embodiment of the present disclosure provides an electronic device, including: a memory, a processor, and computer-executable instructions stored on the memory and operable on the processor; the computer-executable instructions, when executed, cause the processor to execute the method for determining recommendation information as described in the first aspect.

In a fourth aspect, an embodiment of the present disclosure provides a computer-readable medium, the computer-readable medium is used to store computer-executable instructions, and the computer-executable instructions, when executed by a processor, cause the processor to execute the method for determining recommendation information as described in the first aspect.

### BRIEF DESCRIPTION OF DRAWINGS

In order to explain the embodiments of the present disclosure or the technical solutions in the prior art more clearly, the drawings needed to be used in the description of the embodiments or the prior art will be briefly introduced below. Obviously, the drawings in the following description are only some embodiments recorded in the present disclosure, and for those skilled in the art, other drawings can be obtained according to these drawings without paying creative labor.
Fig. 1a shows a flowchart of a method for determining recommendation information provided by an embodiment of the present disclosure;
Fig. 1b is a schematic diagram of an information recommendation page provided by an embodiment of the present disclosure;
Fig. 1c is a schematic diagram of a selection page provided by an embodiment of the present disclosure;
Fig. 2 is another schematic diagram of an information recommendation page of object feature information provided by an embodiment of the present disclosure;
Fig. 3 shows another flowchart of a method for determining recommendation information provided by an embodiment of the present disclosure;
Fig. 4 is a schematic diagram of an editing page provided by an embodiment of the present disclosure;
Fig. 5 is a schematic diagram of a guidance page provided by an embodiment of the present disclosure;
Fig. 6 shows a schematic structural diagram of an apparatus for determining recommendation information provided by an embodiment of the present disclosure; and
Fig. 7 is a schematic diagram of a hardware structure of an electronic device that executes a method for determining recommendation information provided by an embodiment of the present disclosure.

### DETAILED DESCRIPTION

In order to make those skilled in the art better understand the technical solutions of the embodiments of the present disclosure, the technical solutions of the embodiments will be described in a clearly and fully understandable way in connection with the drawings related to the embodiments of the present disclosure. Apparently, the described embodiments are just a part but not all of the embodiments of the present disclosure. Based on the described embodiments herein, those skilled in the art can obtain other embodiment(s), without any inventive work, which should be within the scope of the embodiments of the present disclosure.

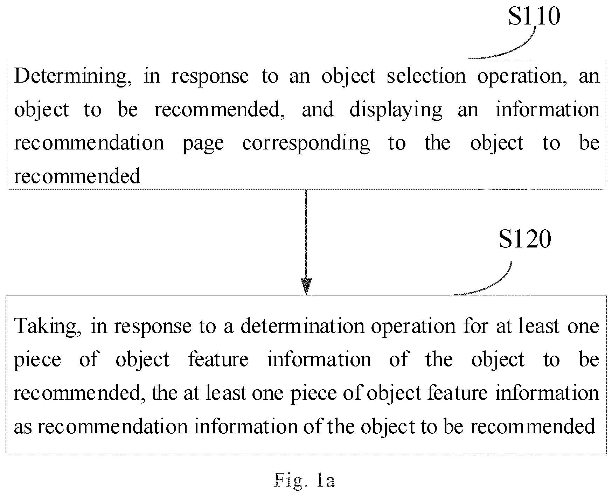

Fig. 1a shows a flowchart of a method for determining recommendation information provided by an embodiment of the present disclosure, and the method can be executed by an electronic device, such as a terminal device or a server end device. In other words, the method can be executed by software or hardware installed on the terminal device or server end device. The server end includes, but is not limited to, a single server, a server cluster, a cloud server or a cloud server cluster, etc.

Users who apply this solution can be providers or publishers of multimedia information, including, for example, streamers selling goods through live streaming, merchant operators, or creators of short videos, etc., and can be collectively referred to as merchants. In the scene of introducing an object to be recommended through multimedia information, it is necessary to output the object feature information of the object to be recommended with high quality and high efficiency. In order to better mine the object feature information of the object to be recommended, it may be necessary to refer to and learn from other multimedia information. When needing to create a recommendation text for a merchandise, a merchant can refer to and learn from the recommendation information in other multimedia information corresponding to the merchandise, so as to create a recommendation script (understandably, the recommendation script is a reusable text) belonging to the merchant's own merchandise, and therefore, when the merchant creates a short video or a live streaming recommendation for the merchandise in the subsequent, a merchandise recommendation text ( (such as selling points) in the short video can be created based on the script, without the need for the merchant to manually input the recommendation text of the merchandise again and again in different scenes. Based on this, as shown in Fig. 1a, the following steps can be performed.

Step S110: Determining, in response to an object selection operation, an object to be recommended, and displaying an information recommendation page corresponding to the object to be recommended.

The object to be recommended can include a merchandise that is being or to be recommended by the merchant, or an object that is being or to be recommended by short video publishers. The object to be recommended can be a tangible object, or an intangible object, such as a certain service item, etc. The information recommendation page includes a plurality of pieces of object feature information of the object to be recommended, and the object feature information of the object to be recommended is determined according to multimedia information corresponding to the object to be recommended and satisfying a preset condition.

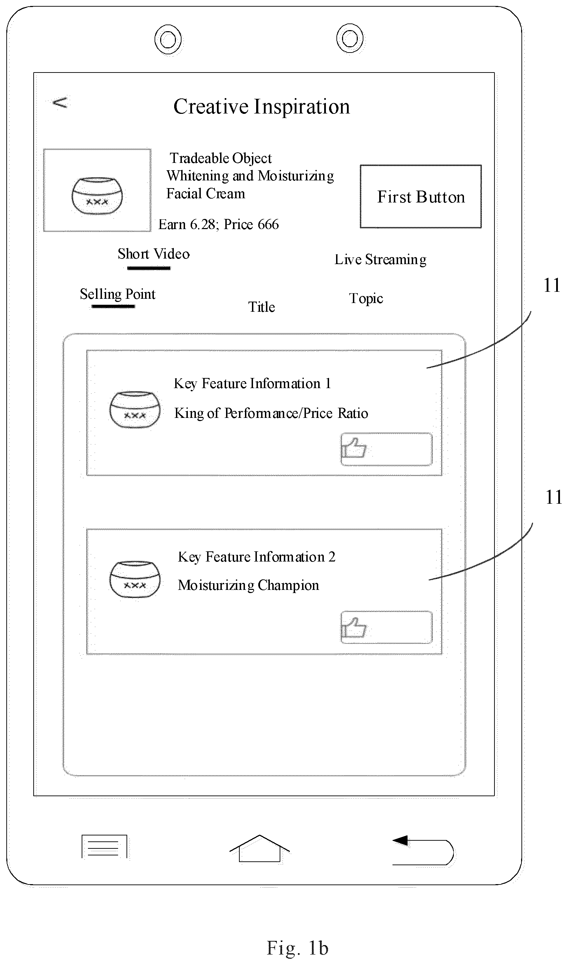

The information recommendation page is used to display a plurality of pieces of object feature information of the object to be recommended, so that the merchant can conveniently and quickly browse the plurality of pieces of object feature information of the object to be recommended, and at least one piece of object feature information can be selected and confirmed in the following steps through the information recommendation page. Fig. 1b is a schematic diagram of an information recommendation page provided by an embodiment of the present disclosure, and each object to be recommended can include one piece of object feature information or a plurality of pieces of object feature information. The object feature information can be used to represent the attributes, characteristics, or usage scenarios of the object to be recommended. For example, the object to be recommended is facial cream, and its object feature information can include "King of Performance/Price Ratio" and "Moisturizing Champion", etc. In addition, the object feature information can also be the feature information that reflects the usage scenarios or other dimensions, such as a scenario of sending to parents, or a scenario of sending to relatives or friends, etc. The dispaly form of the object feature information can include at least one of a feature word, an example sentence containing the feature word, and a multimedia content example. For example, the feature word corresponding to the facial cream can be "Moisturizing", and the example sentence containing the feature word can be "Moisturizing expert, buy it!", and the multimedia content can be the live streaming content of a streamer selling the facial cream.

Optionally, the form of multimedia information can include short video or live streaming, and can be a complete short video or live streaming content, or clips corresponding to the object to be recommended in the short video or live streaming. The merchant can view the corresponding multimedia information by triggering the object feature information.

The multimedia information satisfies a preset condition. The preset condition can include a condition that a predetermined parameter is greater than a preset threshold, and the predetermined parameter can include at least one of a completion rate, number of comments, number of likes and number of shares of the multimedia information. Specifically, the multimedia information satisfies at least one of the following:
the completion rate of the multimedia information is greater than a preset completion rate threshold;
the number of comments for the multimedia information is greater than a preset threshold value of comments;
the number of likes for the multimedia information is greater than a preset threshold value of likes;
the number of shares sharing the multimedia information is greater than a preset threshold value of shares.

Therefore, by setting the preset condition, the quality of the multimedia information can be improved, and the quality of the recommendation information of the object to be recommended ultimately determined from the multimedia information can also be improved.

It can be understood that before using the technical solutions of various embodiments in the present disclosure, a user will be informed of the intellectual property rights, types of personal information, scope of use, usage scenarios, etc. of the user involved in an appropriate way, and authorization from the user will be obtained. For example, before determining at least one multimedia corresponding to the object to be recommended in this step, as an optional but non-limiting implementation, authorization from a copyright holder of the multimedia should also be received; the authorization can be obtained by means of sending prompt information to the user, for example, in a pop-up window, and the authorization prompt information can be presented in text in the pop-up window. In addition, the pop-up window can also carry a selection control for the user to choose to "agree" or "disagree" to provide copyright authorization to the electronic device, and enable users to confirm the scope of use, usage scenarios and other contents of the copyright. Similarly, similar technical processing can also be carried out when it is necessary to obtain the personal information of the user, such as the copyright holder of the multimedia. It can be understood that the above-mentioned process of notifying and obtaining authorization from the user is merely illustrative and does not limit the implementation of the present disclosure, and other ways compliant to relevant laws and regulations can also be applied to the implementation of the present disclosure.

Step S120: Taking, in response to a determination operation for at least one piece of object feature information of the object to be recommended, the at least one piece of object feature information as recommendation information of the object to be recommended.

With reference to Fig. 1b, the user can perform a determination operation on the object feature information 1, "King of Performance/Price Ratio", or the object feature information 2, "Moisturizing Champion". If the object feature information 2, "Moisturizing Champion" is determined, the object feature information 2, "Moisturizing Champion" is taken as the recommendation information of the object to be recommended in this step.

A method for determining recommendation information provided by the embodiment of the present disclosure includes: determining, in response to an object selection operation, an object to be recommended; and displaying an information recommendation page corresponding to the object to be recommended; the information recommendation page includes a plurality of pieces of object feature information of the object to be recommended, and the object feature information of the object to be recommended is determined according to multimedia information corresponding to the object to be recommended and satisfying a preset condition; and taking, in response to a determination operation for at least one piece of object feature information of the object to be recommended, the at least one piece of object feature information as recommendation information of the object to be recommended. Through the information recommendation page, the merchant can conveniently and quickly browse a plurality of pieces of object feature information of the object to be recommended, and make selections therefrom and confirmations, thereby improving the efficiency of obtaining the recommendation information of the object to be recommended, and improving the quality of the obtained recommendation information of the object to be recommended through the setting of a preset condition, and further helping the multimedia creator to accurately and quickly determine the recommendation information of the object to be recommended.

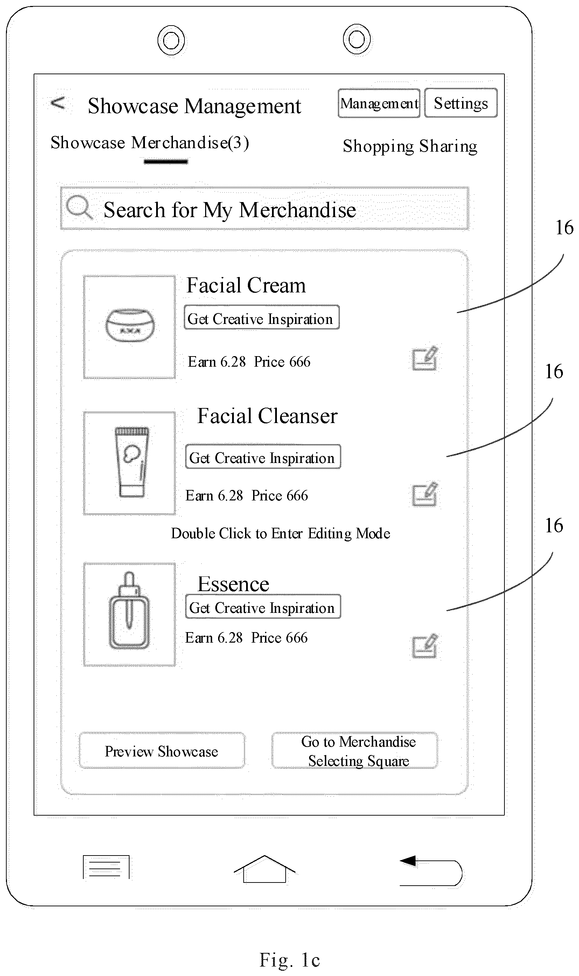

In one implementation, in step S110, a selection page of the object to be recommended can be displayed, and a plurality of objects are displayed on the selection page of the object to be recommended; a selection operation of selecting at least one object from the plurality of objects on the selection page of the object to be recommended is received; the at least one object corresponding to the selection operation is determined as the object to be recommended. The selection page can be used to save multiple objects selected by the merchant. This step can select from the objects saved on the selection page to determine the object to be recommended, which enables the merchant to determine the object to be recommended through a simple operation. Referring to a selection page of the object to be recommended provided by an embodiment of the present disclosure as shown in Fig. 1c, at least one object / a plurality of objects 16 is/are listed on the page; optionally, identification information of the object to be recommended is displayed on the page, and the identification information of the object to be recommended includes at least one piece of information corresponding to the object to be recommended, such as picture, name, model, characteristics, sales volume, etc. After the streamer selects at least one merchandise to be sold, the merchandise can be displayed on the information recommendation page corresponding to the object to be recommended, for example, on the showcase management page in the figure. In this step, selection can be performed on the selection page. For example, the user can click a "Get Creative Inspiration" button, and select one of objects to be recommended as the object to be recommended.

In one implementation, the multimedia information can include a first video, and before the displaying an information recommendation page corresponding to the object to be recommended in step S110, the text and/or speech in the first video can be recognized to obtain a recognition result; a semantic parsing process is performed on the recognition result to determine the object feature information of the object to be recommended. Specifically, the text in the first video can be recognized to obtain a text recognition result; a semantic parsing process is performed on the text recognition result to determine a part of text corresponding to the object to be recommended, and based on the part of text, a first sentence that can reflect the attributes, characteristics or usage scenarios of the object to be recommended is determined; optionally, the first sentence can be taken as object feature information. In addition, a cluster analysis process can be further performed on the first sentence to obtain a tag corresponding to the first sentence. The tag corresponding to the first sentence can also be taken as object feature information. Similarly, the speech in the first video can also be recognized to obtain a speech recognition result, and the speech recognition result is converted into a text format, which is subjected to a process similar to that of the text recognition result. Optionally, before step S110, a corresponding relationship between the object to be recommended and the first video that satisfys the preset condition can be established. For example, if the object to be recommended is merchandise A, a first video *a* released by streamer No.1 when selling merchandise A can be obtained, and the number of likes of the first video *a* exceeds 100,000. Further, in this step, the object feature information of the object to be recommended can be parsed and determined from the first video, and a corresponding relationship between the first video and the object feature information of the object to be recommended, such as a corresponding relationship between the first video *a* and "Moisturizing," "Moisturizing Expert," can also be established accordingly, and a corresponding relationship between the object to be recommended, the first video and the object feature information can be established accordingly. In step S110, the object feature information is determined from the above corresponding relationship through the object to be recommended, and the object feature information is displayed on the information recommendation page; or a first video can be determined, the corresponding first video can be played by triggering the object feature information. Specifically, the part of the first video that matches the object to be recommended can be played, instead of playing the entire content of the first video.

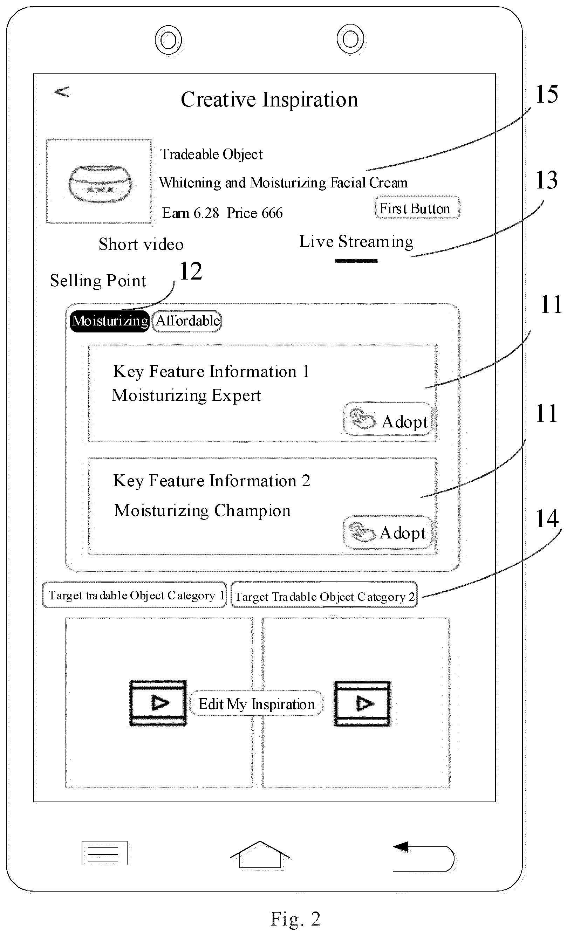

Refer to Fig. 2, which is another schematic diagram of an information recommendation page of object feature information provided by an embodiment of the present disclosure. In one possible implementation, the object feature information includes an object feature tag and feature text information corresponding to the object feature tag. The feature text information is obtained according to the multimedia information satisfying the preset condition. For example, the feature text information can be text information obtained by performing a semantic parsing process on the multimedia information, and the object feature tag can be obtained by performing a cluster analysis process on the feature text information. There is a correspondence between the text information and the tag, the text information can reflect the information of the tag, and the tag is obtained based on text analysis and can also reflect the features of the text. The information recommendation page includes a first region 12 and a second region 11. The first region 12 is used to display the object feature tag, and the second region 11 is used to display a plurality of pieces of feature text information.

Optionally, if the object feature information includes a plurality of object feature tags, the plurality of object feature tags are displayed in the first region 12. For example, as shown in Fig. 2, the object feature information includes a plurality of object feature tags, "Moisturizing" and "Affordable", and the feature text information corresponding to the object feature tags includes, for example, "Moisturizing Expert" and "Moisturizing Champion". For another example, "You will definitely regret buying this little moisturizer because you regret buying it too late", and so on (not shown in the picture). The first region 12 is used to display a plurality of object feature tags, "Moisturizing" and "Affordable", and the second region 11 is used to display "Moisturizing Expert" and "Moisturizing Champion". Therefore, it is convenient for the merchant to browse through the reasonable layout of the information recommendation page.

In one implementation, in response to a selection operation for a first tag among the plurality of object feature tags, a display content in the second region of the information recommendation page is adjusted to feature text information corresponding to the first tag. The the first tag is an object feature tag among the plurality of object feature tags. The display mode of the second region can include two types.

Mode 1: The second region only displays the feature text information corresponding to the first tag, and does not display the feature text information corresponding to other tags, and other tags are tags other than the first tag among the plurality of object feature tags. As shown in Fig. 2, the object feature information 12 contains a plurality of pieces of information related to moisturizing and being affordable, and the user selects the object feature information "moisturizing". The user clicks "Moisturizing", and the display content in the second region 11 of the information recommendation page is adjusted to the example sentences "Moisturizing Expert" and "Moisturizing Champion" related to "Moisturizing", while the feature text information related to "Affordable" is not displayed. On the contrary, if the user clicks "Affordable", the display content in the second region 11 of the information recommendation page is adjusted to the example sentence "It is the most affordable on the entire network, you will regret it if you don't buy it now" related to "Affordable", while the above example sentences related to "Moisturizing" are no longer displayed.

Mode 2: The feature text information corresponding to each tag can be displayed on the information recommendation page. In this step, in response to a selection operation for a first tag among the plurality of object feature tags, the feature text information corresponding to the first tag can be displayed in the second region, and the second region is located in an interface position visible to the user through jumping or switching of the display interface, while the feature text information corresponding to other tags is located in an interface invisible to the user. For example, in the split-screen display mode, the second region is the screen currently displayed on the interface, which the user can view. However, the feature text information corresponding to other tags can be on the next screen of the interface, and the users cannot view it for the time being. When the user selects a different first tag, the interface automatically jumps or switches, and the feature text information corresponding to the first tag is displayed in the currently visible second region. Therefore, the multimedia is classified and filtered, which is convenient for the user to browse.

Optionally, on the information recommendation page, the object feature information can be taken as a control to trigger displaying multimedia information; by clicking the object feature information, the multimedia information corresponding to the object feature information can be viewed. In this step, the number of pieces of object feature information that can be displayed on each information recommendation page can be set, that is, the number of pieces of multimedia information that can be linked to can be set, for example, at most five pieces or the like can be displayed. The multimedia includes videos and live streaming clips. If the content is a video, each example sentence shows the sales volume of the corresponding video and videos related to the author's nickname, and the sales volume is expressed in intervals, such as more than 300,000, etc. Similarly, if the multimedia is live streaming, each example sentence shows the sales volume of the product in the corresponding live streaming room and the live streaming rooms related to the author's nickname, and similarly, the sales volume is expressed in intervals. Therefore, when there are many pieces of object feature information, the object feature information can be displayed to the users more clearly and pertinently.

In one implementation, on the information recommendation page of the object feature information, the at least one multimedia and at least one piece of object feature information can also be displayed according to the category of the multimedia or the category of the object to be recommended. With reference to Fig. 2, the categories of multimedia include, for example, short videos and live streaming videos. On the information recommendation page, the multimedia is distinguished according to the category of the multimedia and displayed separately. For example, Fig. 2 illustrates that the category of the multimedia is multimedia corresponding to a live streaming video 13, which is convenient for the user to view multimedia of different categories and obtain more valuable multimedia. The categories of the objects to be recommended include a plurality of categories 13, such as introduction of merchandises of the same sort, introduction of merchandises of the similar sort, videos of popular merchandises, etc. If the corresponding multimedia is not included in the live streaming video category, the corresponding module, such as the essence inspiration module, may not be displayed. Therefore, by displaying the at least one multimedia and the at least one piece of object feature information according to the category of the multimedia or the category of the object to be recommended, the user can more conveniently obtain the multimedia needed for his/her own creation.

In a possible implementation, the determination operation for at least one piece of object feature information of the object to be recommended in step S120 includes at least one of the following operation modes: Operation mode 1: performing a preset trigger gesture on at least one piece of feature text information in the second region, for example, a preset trigger gesture such as a click or a double click, etc., is performed on at least one feature text information itself in the second region. For example, in the case where the feature text information "Moisturizing Expert" is included in the second region, the feature text information "Moisturizing Expert" itself in the second region can be clicked. Operation mode 2: performing a preset trigger operation on a selection control of at least one piece of feature text information in the second region; in the second region of the information recommendation page, each piece of feature text information is provided with a corresponding selection control, such as a control "Adopt". In this mode, for example, the control "Adopt" can be clicked.

As shown in Fig. 2, in one possible implementation, the information recommendation page can further include a third region 15, the third region is used to display identification information of the object to be recommended. Optionally, the identification information of the object to be recommended includes at least one of the name, serial number, characteristics and image of the object to be recommended, such as, the name "Facial Cream", the characteristics "Whitening and Moisturizing", etc. Therefore, the embodiment of the present disclosure can conveniently and efficiently provide high-quality recommendation information for the merchant through reasonable layout of the information recommendation page.

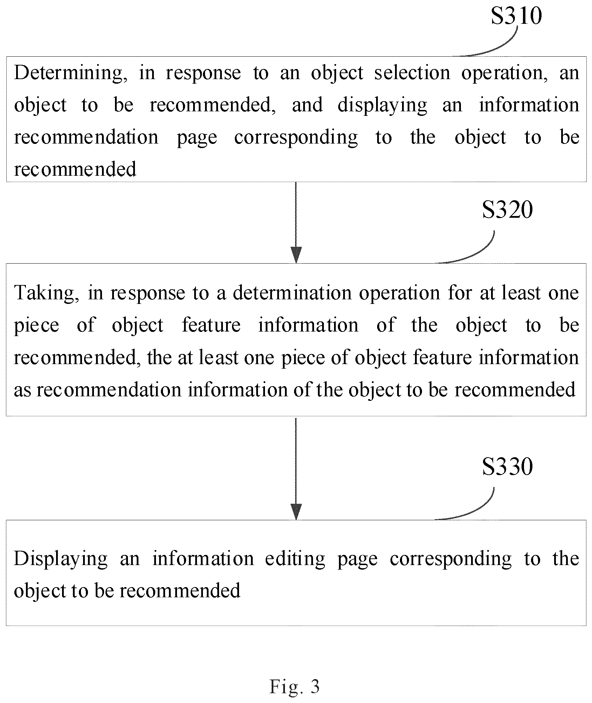

Fig. 3 is a schematic diagram of another method for determining recommendation information provided by an embodiment of the present disclosure. As shown in the figure, the method includes:

S310: Determining, in response to an object selection operation, an object to be recommended, and displaying an information recommendation page corresponding to the object to be recommended.

This step can adopt the description of the corresponding step in the embodiment of Fig. 1, which will not be repeated here.

S320: Taking, in response to a determination operation for at least one piece of object feature information of the object to be recommended, the at least one piece of object feature information as recommendation information of the object to be recommended.

This step can adopt the description of the corresponding step in the embodiment of Fig. 1, which will not be repeated here.

S330: Displaying an information editing page corresponding to the object to be recommended.

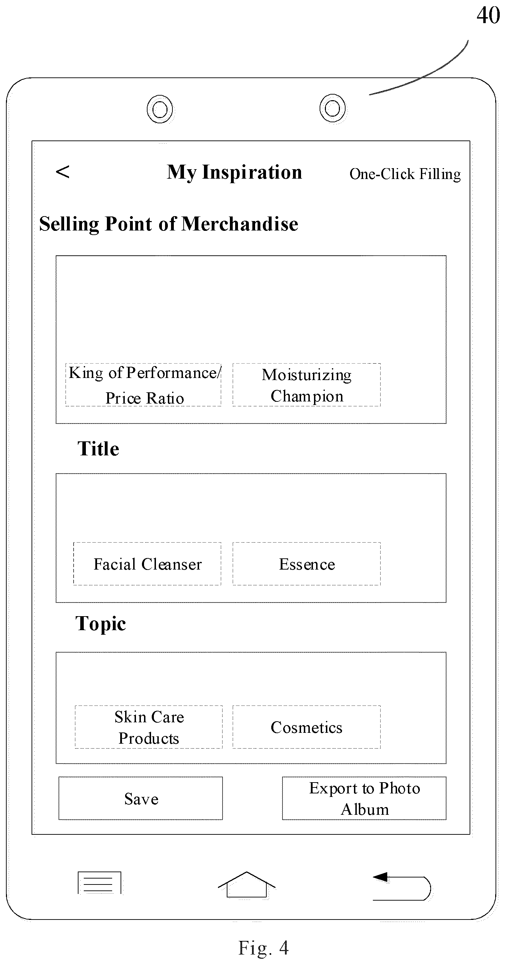

The information editing page includes an editing region, and the editing region is used to display the recommendation information and to receive edited text information for the recommendation information. The editing page is used to receive the merchant's editing on the recommendation information. The Merchant can work on creation in the editing region based on the recommendation information, for example, performing an input operation on the recommendation information, such as adding to, modifying or deleting the recommendation information, etc. The input operation can be text input. The input operation can also be speech or video input, and text information is obtained by recognizing the speech or video input, and the obtained text information is taken as the above text input. Fig. 4 shows a schematic diagram of an editing page provided by an embodiment of the present disclosure. For example, on the "My Inspiration" page 40, the editing region displays the recommended information determined in the previous step, such as "King of Performance/Price Ratio" and "Moisturizing Champion", while other object feature information displayed on the information recommendation page shown in Fig. 2 but not selected, such as "moisturizing expert" in Fig. 2, is not taken as recommended information and is not displayed on the editing page shown in Fig. 4.

In one implementation, after this step, image data for the object to be recommended can be obtained first, the image data can include an image or a video, etc. Then, a recommended video corresponding to the object to be recommended can be generated according to the image data, the edited text information and the recommendation information. For example, the author of a short video can input image data for introducing merchandise *a*, and can determine, in combination with the recommendation information and the edited text information formed in the previous step, the selling points of merchandise *a,* and the title of the short video, etc., thereby generating a short video for introducing merchandise *a* corresponding to the author of the short video. For example, in the case where merchandise *a* is a facial cream, the selling point of merchandise *a* determined in this step can be "Moisturizing Tool Suitable For All Sensitive Skin", etc., and the selling point of merchandise *a* can be output by a character through voice in a short video. The title of the short video can be "Moisturizing, Moisturizing, and Moisturizing to the Point of Being Outrageous", and the title of the short video can be output in the form of text through the identification information of the short video, etc.

In one implementation, after this step, interpretive prompt information corresponding to the object to be recommended can be generated according to the edited text information and the recommendation information. Optionally, if it is detected that the object to be recommended is an interpretive object in a live streaming room, the interpretive prompt information corresponding to the object to be recommended can be displayed on a prompt page of the live streaming room. Specifically, the object to be recommended can be an object being introduced in the live streaming room, or the object to be recommended can be an object that is not being introduced but is in the to-be-introduced list in the live streaming room, such as an object in the little yellow trolley list.

As an example, an editing operation can be performed on the recommendation information, such as adding to, modifying or deleting the recommendation information, etc., so as to generate interpretive prompt information, and a prompt page corresponding to the object to be recommended can be generated based on the interpretive prompt information; the prompt page can be displayed on the display or terminal screen of the user on the operation side, while the prompt page is invisible to the party watching the live streaming, such as buyers, etc. Therefore, when recording video or live streaming, the user can fluently output the content of copywriting without reciting the copywriting. The prompt page can include a first region and a second region, the first region of the prompt page is used to display the edited text information, and the second region of the prompt page is used to display the recommendation information.

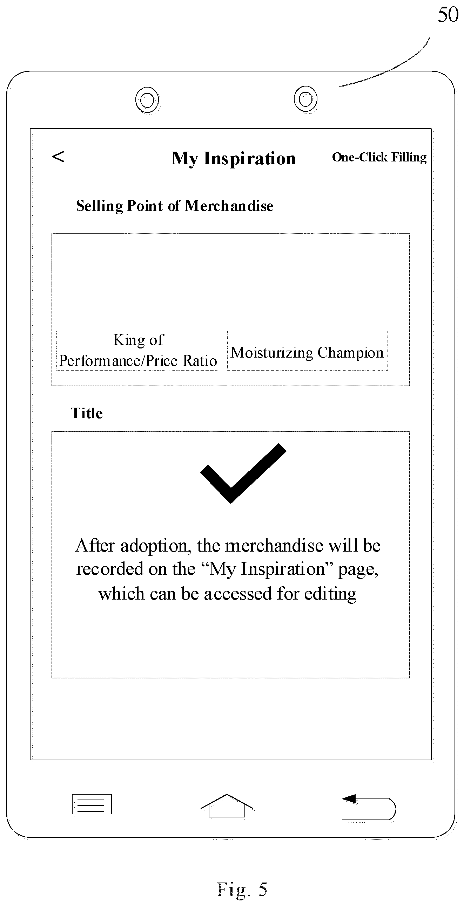

In one implementation, the determination operation for at least one piece of object feature information of the object to be recommended is a first-time operation, before the displaying an information editing page corresponding to the object to be recommended, the method for determining recommendation information further includes: displaying a guidance page, the guidance page is used to indicate recording the recommendation information on the information editing page and an application mode of the information editing page, introduce the application mode of the editing page to the user, and help a new user who uses the editing page for the first time to achieve correct application operations. As shown in Fig. 5, for example, it is introduced to the user that the editing region can be clicked to input text, and the editing region can be pressed and held for voice input, etc.

In one implementation, the trigger mode for displaying the editing page can include the following modes. Mode 1: A preset trigger operation is performed on the selection control of at least one piece of feature text information in the second region. Referring to Fig. 2, the user can click a button corresponding to the control "Adopt". After the "Adopt" button is clicked, it changes into "Adopted", and the adopted content can be seen in the "My Inspiration" section of the editing page. Mode 2: A trigger operation is performed on the selection control of the object to be recommended. Referring to Fig. 2, the user can also enter the editing page by triggering the "first button".

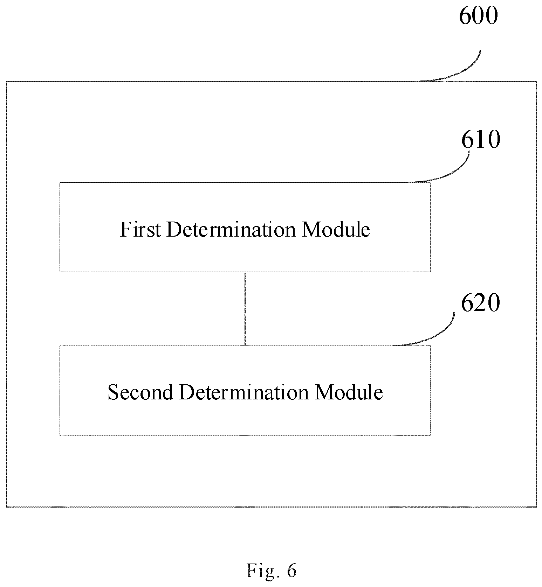

Fig. 6 shows a schematic structural diagram of an apparatus for determining recommendation information provided by an embodiment of the present disclosure. The apparatus 600 includes a first determination module 610 and a second determination module 620.

The first determination module 610 is configured to determine, in response to an object selection operation, an object to be recommended, and display an information recommendation page corresponding to the object to be recommended; the information recommendation page includes a plurality of pieces of object feature information of the object to be recommended, and the object feature information of the object to be recommended is determined according to multimedia information corresponding to the object to be recommended and satisfying a preset condition. The second determination module 620 is configured to take, in response to a determination operation for at least one piece of object feature information of the object to be recommended, the at least one piece of object feature information as recommendation information of the object to be recommended.

In one implementation, the object feature information includes an object feature tag and feature text information corresponding to the object feature tag; the information recommendation page includes a first region and a second region, the first region is used to display the object feature tag, and the second region is used to display a plurality of pieces of feature text information; the feature text information is obtained according to the multimedia information satisfying the preset condition.

In one implementation, if the object feature information includes a plurality of object feature tags, the plurality of object feature tags are displayed in the first region; after displaying an information recommendation page corresponding to the object to be recommended, the first determination module 610 is further configured to adjust, in response to a selection operation for a first tag among the plurality of object feature tags, a display content in the second region of the information recommendation page to feature text information corresponding to the first tag; the first tag is an object feature tag among the plurality of object feature tags.

In one implementation, the information recommendation page further includes a third region, and the third region is used to display identification information of the object to be recommended.

In one implementation, the determination operation for at least one piece of object feature information of the object to be recommended includes at least one of the following:
performing a preset trigger gesture on at least one piece of feature text information in the second region;
performing a preset trigger operation on a selection control of at least one piece of feature text information in the second region; in the second region of the information recommendation page, each piece of feature text information is provided with a corresponding selection control.

In one implementation, after taking, in response to a determination operation for at least one piece of object feature information of the object to be recommended, the at least one piece of object feature information as recommendation information of the object to be recommended, the second determination module 620 is further configured to display an information editing page corresponding to the object to be recommended, the information editing page includes an editing region, and the editing region is used to display the recommendation information, and to receive edited text information for the recommendation information.

In one implementation, after displaying an information editing page corresponding to the object to be recommended, the second determination module 620 is further configured to: obtain image data for the object to be recommended; generate a recommendation video corresponding to the object to be recommended according to the image data, the edited text information and the recommendation information.

In one implementation, after displaying an information editing page corresponding to the object to be recommended, the second determination module 620 is further configured to: generate interpretive prompt information corresponding to the object to be recommended according to the edited text information and the recommendation information; display, if it is detected that the object to be recommended is an interpretive object in a live streaming room, the interpretive prompt information corresponding to the object to be recommended is displayed on a prompt page of the live streaming room.

In one implementation, in a case where the determination operation for at least one piece of object feature information of the object to be recommended is a first-time operation, before displaying an information editing page corresponding to the object to be recommended, the second determination module 620 is further configured to display a guidance page, the guidance page is used to indicate recording the recommendation information on the information editing page and an application mode of the information editing page.

In one implementation, the multimedia information includes a first video, and before displaying an information recommendation page corresponding to the object to be recommended, the second determination module 620 is further configured to: recognize text and/or speech in the first video to obtain a recognition result; perform a semantic parsing process on the recognition result to determine the object feature information of the object to be recommended

In one implementation, the first determination module 610 is configured to: display a selection page of the object to be recommended, a plurality of objects being displayed on the selection page of the object to be recommended; receive a selection operation of selecting at least one object from the plurality of objects on the selection page of the object to be recommended; determine the at least one object corresponding to the selection operation as the object to be recommended.

In one implementation, the preset condition includes that a predetermined parameter is greater than a preset threshold, and the predetermined parameter includes at least one of a completion rate, number of comments, number of likes, and number of shares of the multimedia information.

In the embodiment of the present disclosure, in response to an object selection operation, an object to be recommended is determined, and an information recommendation page corresponding to the object to be recommended is displayed; the information recommendation page includes a plurality of pieces of object feature information of the object to be recommended, and the object feature information of the object to be recommended is determined according to multimedia information corresponding to the object to be recommended and satisfying a preset condition; and in response to a determination operation for at least one piece of object feature information of the object to be recommended, the at least one piece of object feature information is taken as recommendation information of the object to be recommended, thereby improving the efficiency of obtaining the recommendation information of the object to be recommended, and improving the quality of the obtained recommendation information of the object to be recommended, and helping the multimedia creator to accurately and quickly determine the recommendation information of the object to be recommended.

The apparatus 600 provided by the embodiment of the present disclosure can execute the methods described in the foregoing method embodiments, and realize the functions and beneficial effects of the methods described in the foregoing method embodiments, which will not be repeated here.

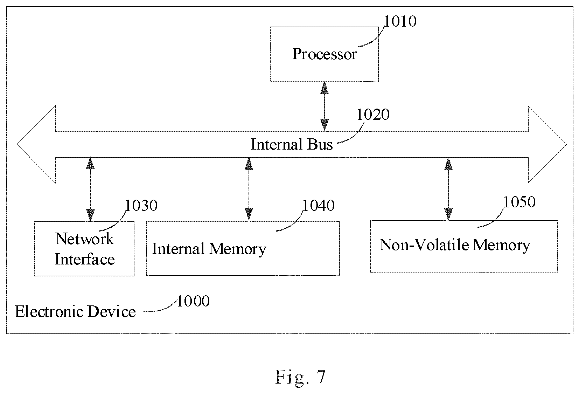

Fig. 7 shows a schematic diagram of a hardware structure of an electronic device 1000 that executes the method for determining recommendation information provided by an embodiment of the present disclosure. Referring to Fig. 6, at a hardware level, the electronic device includes a processor 1010, and optionally, the electronic device further includes an internal bus 1020, a network interface 1030, and a memory. The memory can include an internal memory 1040, such as a high-speed Random-Access Memory (RAM), and can also include a non-volatile memory 1050, such as at least one magnetic disk memory. Of course, the electronic device can further include hardware required by other services.

The processor 1010, the network interface 1030, and the memory can be interconnected through the internal bus 1020. The internal bus may be an Industry Standard Architecture (ISA) bus, a Peripheral Component Interconnection (PCI) bus, or an Extended Industry Standard Architecture (EISA) bus, etc. The bus can be divided into an address bus, a data bus, a control bus, etc. For simplicity of illustration, only one bidirectional arrow is used as a representation in the figure. However, it does not mean that there is only one bus or one type of bus.

The memory is used to store a program. Specifically, the program can include program codes, which include computer operation instructions. The memory can include the internzal memory 1040 and the non-volatile memory 1050, and provide instructions and data to the processor 1010.

The processor 1010 reads a corresponding computer program from the non-volatile memory 1050 into the internal memory 1040 and then runs the computer program, thus forming an apparatus for determining recommendation information at a logical level. The processor 1010 executes the program stored in the memory and is specifically used to execute the method described in the embodiments of Fig. 1a- Fig. 8, and achieving the same or corresponding technical effects.

The method disclosed in the embodiments shown in Fig. 1a- Fig. 3 can be applied to a processor or can be implemented by the processor 1010. The processor 1010 may be an integrated circuit chip and has a signal processing capability. In an implementation process, steps of the aforementioned method can be implemented by a hardware integrated logic circuit in the processor 1010 or by instructions in the form of software. The processor 1010 can be a general-purpose processor, including a Central Processing Unit (CPU), a Network Processor (NP), etc.; or, the processor 1010 can be a Digital Signal Processor (DSP), an Application Specific Integrated Circuit (ASIC), a Field-Programmable Gate Array (FPGA), or other programmable logic device, a discrete gate or a transistor logic device, or a discrete hardware assembly. The methods, steps, and logical block diagrams disclosed in the embodiments of the present disclosure can be implemented or executed. The general-purpose processor can be a microprocessor, or the processor can be any conventional processor or the like. The steps of the method disclosed in combination with the embodiment of the present disclosure can be directly executed and completed by a hardware decoding processor, or can be executed and completed by a combination of hardware and software modules in a decoding processor. The software module can be located on a mature storage medium in the prior art, such as a random access memory, a flash memory, a read-only memory, a programmable read-only memory, an electrically erasable programmable memory, a register, or the like. The storage medium is located in the memory. The processor 1010 reads information in the memory, and completes the steps in the aforementioned method in conjunction with hardware thereof.

The electronic device can also execute the methods described in the foregoing method embodiments, and realize the functions and beneficial effects of the methods described in the foregoing method embodiments, which will not be repeated here.

Certainly, in addition to the software implementation manner, the electronic device of the embodiments of the present disclosure does not exclude other implementation manners, such as a logic device, or a combination of software and hardware, etc. In other words, an execution entity of the following processing flow is not limited to logic units, and may also be hardware or logic devices.

An embodiment of the present disclosure further provides a computer-readable storage medium. The computer-readable storage medium stores one or more programs, and the one or more programs, when executed by an electronic device containing a plurality of application programs, cause the electronic device to execute the methods described in the aforementioned method embodiments of Fig. 1a- Fig. 3, and realize the functions and beneficial effects of the methods described in the aforementioned method embodiments, which will not be repeated here.

The computer-readable storage medium includes a Read-Only Memory (ROM), a Random Access Memory (RAM), a magnetic disk or an optical disc, etc.

Further, an embodiment of the present disclosure further provides a computer program product, the computer program product includes a computer program stored on a non-transitory computer-readable storage medium, and the computer program includes program instructions. When the program instructions are executed by a computer, the following flow is implemented: the method described in the foregoing method embodiments of Fig. 1a- Fig. 3 is implemented, and the functions and beneficial effects of the method described in the foregoing method embodiments are realized, which will not be repeated here.

In short, the above is merely preferred embodiments of the present disclosure, and is not intended to limit the protection scope of the embodiments of the present disclosure. Any modifications, equivalent substitutions, and improvements, etc., made within the spirit and the principle of the present disclosure shall fall within the protection scope of the present disclosure.

The systems, apparatuses, modules, or units described in the aforementioned embodiments can be specifically implemented by a computer chip or an entity, or implemented by a product having a predetermined function. A typical implementation device is a computer. Specifically, the computer can be, for example, a personal computer, a laptop computer, a cellular phone, a camera phone, a smart phone, a personal digital assistant, a media player, a navigation device, an email device, a game console, a tablet computer, a wearable device, or a combination of any of these devices.

Computer-readable media, includes permanent and non-permanent, removable and non-removable media, and can store information by any method or technology. Information can be computer-readable instructions, data structures, modules of programs or other data. Examples of storage media for computers include, but not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, Compact disc read-only memory (CD-ROM), digital versatile disc (DVD) or other optical storage, magnetic cassettes, magnetic tape magnetic disk storage or other magnetic storage devices or any other non-transmission media can be used to store information that can be accessed by computing devices. According to the definition in this article, computer-readable media does not include temporary computer-readable media, such as modulated data signals and carrier waves.

It should also be noted that in this article, the terms "comprise", "include", or any other variant thereof are intended to cover a non-exclusive inclusion, so that a process, method, merchandise, or device that includes a series of elements not only includes those elements, but also includes other elements not explicitly listed, or further includes elements inherent to such process, method, merchandise, or device. Without more restrictions, an element defined by the statement "includes one..." does not exclude the presence of additional identical elements in the process, method, merchandise, or device that includes the element.

The embodiments of the present disclosure are described in a progressive way, and the same or similar parts among the embodiments can be referred to each other, and each embodiment focuses on the differences from other embodiments. Especially, for the system embodiment, because it is basically similar to the method embodiment, the description is relatively simple, and the relevant points can be found in the description of the method embodiment.

## Claims

1. A method for determining recommendation information, comprising:
determining, in response to an object selection operation, an object to be recommended, and displaying an information recommendation page corresponding to the object to be recommended; wherein the information recommendation page comprises a plurality of pieces of object feature information of the object to be recommended, and the object feature information of the object to be recommended is determined according to multimedia information corresponding to the object to be recommended and satisfying a preset condition;
taking, in response to a determination operation for at least one piece of object feature information of the object to be recommended, the at least one piece of object feature information as recommendation information of the object to be recommended.

2. The method for determining recommendation information according to claim 1, wherein the object feature information comprises an object feature tag and feature text information corresponding to the object feature tag; the information recommendation page comprises a first region and a second region, wherein the first region is used to display the object feature tag, and the second region is used to display a plurality of pieces of feature text information; the feature text information is obtained according to the multimedia information satisfying the preset condition.

3. The method for determining recommendation information according to claim 2, wherein the object feature information comprises a plurality of object feature tags, the plurality of object feature tags are displayed in the first region; after the displaying an information recommendation page corresponding to the object to be recommended, the method for determining recommendation information further comprises:
adjusting, in response to a selection operation for a first tag among the plurality of object feature tags, a display content in the second region of the information recommendation page to feature text information corresponding to the first tag; wherein the first tag is an object feature tag among the plurality of object feature tags.

4. The method for determining recommendation information according to claim 2 or 3, wherein the information recommendation page further comprises a third region, and the third region is used to display identification information of the object to be recommended.

5. The method for determining recommendation information according to any one of claims 2-4, wherein the determination operation for at least one piece of object feature information of the object to be recommended comprises at least one of the following:
performing a preset trigger gesture on at least one piece of feature text information in the second region;
performing a preset trigger operation on a selection control of at least one piece of feature text information in the second region; wherein in the second region of the information recommendation page, each piece of feature text information is provided with a corresponding selection control.

6. The method for determining recommendation information according to any one of claims 1-5, wherein after the taking, in response to a determination operation for at least one piece of object feature information of the object to be recommended, the at least one piece of object feature information as recommendation information of the object to be recommended, the method for determining recommendation information further comprises:
displaying an information editing page corresponding to the object to be recommended, wherein the information editing page comprises an editing region, and the editing region is used to display the recommendation information, and to receive edited text information for the recommendation information.

7. The method for determining recommendation information according to claim 6, wherein after the displaying an information editing page corresponding to the object to be recommended, the method for determining recommendation information further comprises:
obtaining image data for the object to be recommended;
generating a recommendation video corresponding to the object to be recommended according to the image data, the edited text information, and the recommendation information.

8. The method for determining recommendation information according to claim 6 or 7, wherein after the displaying an information editing page corresponding to the object to be recommended, the method for determining recommendation information further comprises:
generating interpretive prompt information corresponding to the object to be recommended according to the edited text information and the recommendation information;
displaying, if it is detected that the object to be recommended is an interpretive object in a live streaming room, the interpretive prompt information corresponding to the object to be recommended on a prompt page of the live streaming room.

9. The method for determining recommendation information according to any one of claims 6-8, wherein in a case where the determination operation for at least one piece of object feature information of the object to be recommended is a first-time operation, before the displaying an information editing page corresponding to the object to be recommended, the method for determining recommendation information further comprises:
displaying a guidance page, wherein the guidance page is used to indicate recording the recommendation information on the information editing page and an application mode of the information editing page.

10. The method for determining recommendation information according to any one of claims 1-9, wherein the multimedia information comprises a first video, and before the displaying an information recommendation page corresponding to the object to be recommended, the method for determining recommendation information further comprises:
recognizing text and/or speech in the first video to obtain a recognition result;
performing a semantic parsing process on the recognition result to determine the object feature information of the object to be recommended.

11. The method for determining recommendation information according to any one of claims 1-10, wherein the determining, in response to an object selection operation, an object to be recommended, comprises:
displaying a selection page of the object to be recommended, wherein a plurality of objects are displayed on the selection page of the object to be recommended;
receiving a selection operation of selecting at least one object from the plurality of objects on the selection page of the object to be recommended;
determining the at least one object corresponding to the selection operation as the object to be recommended.

12. The method for determining recommendation information according to any one of claims 1-11, wherein the preset condition comprises that a predetermined parameter is greater than a preset threshold, and the predetermined parameter comprises at least one of a completion rate, number of comments, number of likes, and number of shares of the multimedia information.

13. An apparatus for determining recommendation information, comprising:
a first determination module, configured to determine, in response to an object selection operation, an object to be recommended, and display an information recommendation page corresponding to the object to be recommended; wherein the information recommendation page comprises a plurality of pieces of object feature information of the object to be recommended, and the object feature information of the object to be recommended is determined according to multimedia information corresponding to the object to be recommended and satisfying a preset condition; and
a second determination module, configured to take, in response to a determination operation for at least one piece of object feature information of the object to be recommended, the at least one piece of object feature information as recommendation information of the object to be recommended.

14. An electronic device, comprising:
a processor; and
a memory configured to store computer-executable instructions, wherein the computer-executable instructions, when executed, cause the processor to execute the method for determining recommendation information according to any one of claims 1-12.

15. A computer-readable medium, wherein the computer-readable medium stores one program or a plurality of programs, and the one program or the plurality of programs, when executed by an electronic device comprising at least one application program, cause the electronic device to execute the method for determining recommendation information according to any one of claims 1-12.
